# EUROPEAN PATENT APPLICATION

(11) **EP 2 868 556 A1**
(43) Date of publication of application: **06.05.2015**
(21) Application number: 14003663.3
(22) Date of filing: 29.10.2014
(51) Int. Cl.: B62J 6/02, B62J 6/00

(54) **Signalling device for a vehicle**

(30) Priority: 30.10.2013 IT UD20130143
(71) Applicant: Benati, Antonino, 33040 Torreano di Cividale (IT); Benati, Tamara, 33040 Torreano di Cividale (UD) (IT)
(72) Inventor: Benati, Antonino, I-33040 Torreano DI Cividale (UD) (IT)
(74) Representative: D'Agostini, Giovanni

(57) **Abstract**

Signalling device adapted to be installed on a vehicle, wherein the signalling device comprises at least one first unit and a plurality of one or more second units, the first unit being a control unit of the second units, the first unit comprising switches or toggle switches or buttons or sensors which are intended to give an activation command of light or sound signalling indicators on the second unit, wherein the first unit and the second unit are provided with transceivers implementing a wireless communication channel, said signalling device being provided with at least one rear stop light indicating a slowdown or a braking action of the vehicle on which the signalling device is installed.

## Description

### Field of the invention

The present invention relates to a signalling device according to the characteristics of the pre-characterizing part of claim 1.

The present invention also relates to a cycle incorporating a signalling device according to the characteristics of the pre-characterizing part of claim 17.

### Definitions

In the present description and in the appended claims the following terms must be understood according to the definitions given in the following.

In the present description by the term "vehicle" we will indicate in general cycles, that is to say, bicycles, such as pedal bicycles, assisted pedal bicycles, tricycles, such as pedal tricycles, assisted pedal tricycles, quadricycles, such as pedal quadricycles, assisted pedal quadricycles, two-wheeled or three-wheeled lightweight trailers mounted on the rear axle of a bicycle, etc.

The terms "front" and "rear" must be understood as referring to the usual direction of advancement of the vehicle on which the signalling device is installed.

The terms "right" and "left" must be intended as referring to the usual direction of advancement of the vehicle on which the signalling device is installed.

### Prior art

In the field of the production of vehicles, in particular cycles in the form of bicycles (such as pedal bicycles, assisted pedal bicycles), tricycles (such as pedal tricycles, assisted pedal tricycles), quadricycles (such as pedal quadricycles, assisted pedal quadricycles), two-wheeled or three-wheeled lightweight trailers mounted on the rear axle of a bicycle, there is often the need to apply in an easy and fast way some types of signalling devices, such as front lights, rear lights, direction indicator lights, stop lights.

It is known to use front lights and rear lights which are applied by means of brackets and which are powered by a dynamo or an electrical power generator operated by the vehicle itself.

It is also known to use front lights and rear lights which are applied by means of brackets and which are powered by a battery.

The Patent Application EP 2 340 985 describes a wireless indicator for bicycles provided with a control unit mounted on a handlebar of a bicycle, a generator of a braking signal mounted on a brake lever and connected to the front control unit, a rear indicator controlled according to a wireless mode by the front control unit in which the braking signal generator has an insulating body and two strip-shaped electrodes inserted in the body. The electrodes are insulated from each other. The insulating body has an elastic portion in correspondence of one of its ends, which is aligned with the brake lever. When the brake lever is operated, the elastic portion is compressed so that the electrodes contact each other to send a signal to the front control unit. The front control unit activates the braking signal according to a wireless mode to warn vehicles or pedestrians that are behind the bicycle.

The Patent Application EP 1 568 584 describes a signalling device for bicycles with an integrated computer which consists of two elements placed in the front and rear areas of the bicycle. By means of the main control unit placed on the handlebar of the bicycle it is possible to control the functions of front lighting, direction indicator, braking indicator, braking warning tone, horn and paint spraying on the roadway. The user can act on the main control unit to obtain a series of data. The device can be equipped with rechargeable batteries.

The Patent Application US 2008/290999 describes a control device which can be installed on a bicycle or can be carried by a user, which communicates with some accessories by means of radio signals. The control device radiates control signals through its transceiver and the control signals are received by the transceivers of the accessories. Each accessory has a univocal identification code which is incorporated in the radio control signals so that a single lamp can be activated and deactivated. The accessories such as speed sensor and biometric data sensor can transmit information to the control device which in its turn calculates and displays information such as the speed of the bicycle and the frequency of the user's heartbeat.

The Patent Application US 2008/088423 describes a control unit with a display for remotely controlling by means of radio-frequency signals a sound and light warning device. The wireless control unit further includes a light signal controller, a light signal switch circuit, a radio-frequency signal emitter and a first battery set. The sound and light warning device includes a radio-frequency receiver, a light signal control circuit, a LED display, a buzzer and a second battery set. The radio-frequency signal receiver receives the signal of the wireless control unit transmitted in radio frequency. The signal is treated as a flashing turning signal or warning signal to be shown on the LED display and activate a sound warning.

The Patent Application EP 2 505 466 describes a wireless controlled lighting device which comprises a control switch module mounted on the braking handlebars, and a lighting unit mounted on a bicycle. The control switch module includes a switch, a card, an integrated circuit for wireless communication and a first power supply unit. The lighting unit has a wireless receiver, a plurality of indicators and a second power supply unit. The switch and the integrated circuit for wireless communication are electrically connected to the card. The first power supply unit supplies power to the card and to the integrated circuit for wireless communication. When the switch is operating, the integrated circuit for wireless communication emits an operating signal. The wireless receiver, the indicators and the second power supply unit are electrically connected to one another. The second power supply unit supplies power to the wireless receiver and to the indicators. The wireless receiver receives the operating signal and as a result operates the indicators.

The Patent Application US 2010/283590 describes a safety apparatus which comprises a first light source for emitting a first light beam and a first light modulator for modulating the first light beam in order to project a first light image similar to a bicycle lane left limit. A second light source emits a second light beam, and a second light modulator modulates the second light beam in order to project a second light image similar to a bicycle lane right limit. A housing supports the first light source and the second light source and the first and the second light modulators. An assembly device is provided for the assembly of the housing on a bicycle.

### Problems of the prior art

The prior art solutions which use front lights and rear lights powered by a dynamo do not generate a sufficient amount of light to ensure the visibility of the vehicle in conditions of poor visibility, for example at night. Furthermore, such solutions do not allow the driver of the vehicle to show his/her intentions to a following vehicle, for example the intention to turn right or left or the intention to stop, with the consequence that the driver is exposed to possible dangerous situations because the driver of the following vehicle does not know in advance which manoeuvres will be performed. Furthermore, such solutions need wirings to be installed on the vehicle frame which are often difficult to apply and are exposed to damage which may affect the efficiency of the lights themselves or prevent their operation.

The prior art solutions which use front lights and rear lights powered by a battery, although generating a sufficient amount of light to ensure the visibility of the vehicle in conditions of poor visibility, for example at night, have many drawbacks. First of all said lights are often equipped with operating switches which are placed on the body of the light itself, making their operation difficult especially when the vehicle is moving. Furthermore, there still are the drawbacks previously mentioned with reference to the absence of the possibility for the driver of the vehicle to show his/her intentions to a following vehicle, such as the intention to turn right or left or the intention to stop.

### Aim of the invention

The aim of the present invention, which also fills a safety gap of the highway code, is to provide a signalling device which allows the driver of a vehicle to signal his/her intentions to a following vehicle, such as the intention to turn right or left or the intention to stop. In particular, the aim of the present invention is to provide a signalling device which allows the driver of a vehicle, such as a cycle, to signal to a following vehicle a slowdown or braking, for example in the case in which the driver of the vehicle which includes the device wants to stop. In addition to this, the aim of the present invention is also to put the driver of the cycle in the condition to signal the intention to turn, for example to turn left or right.

### Concept of the invention

The aim is achieved with the characteristics of the main claim. The sub-claims represent advantageous solutions.

### Advantageous effects of the invention

The solution according to the present invention, by the considerable creative contribution the effect of which constitutes an immediate and important technical progress, presents various advantages.

The solution according to the present invention allows in an easy and immediate way the driver of a vehicle, in particular a cycle, to signal his/her intentions to a following vehicle, such as the intention to turn right or left or the intention to slow down or to stop or the fact that one is braking.

The solution according to the present invention is of easy installation also on existing vehicles without requiring the installation of cables on the vehicle.

The solution according to the present invention allows to signal to a following vehicle the presence of the vehicle on which the signalling device of the invention is mounted and allows the driver to signal his/her intentions as well as to send warning signals, for example a signal that indicates the side dimension of the vehicle itself in order to allow the following vehicle to keep suitable safety distance for example during overtaking.

Advantageously, the solution according to the present invention also allows to integrate some additional functions which can give useful information to the driver of the vehicle on which the signalling device of the invention is installed.

Advantageously, the solution according to the present invention allows to increase safety for the driver of the vehicle on which the signalling device of the invention is installed.

### Description of the drawings

In the following a solution is described with reference to the enclosed drawings, which are to be considered as non-exhaustive example of the present invention in which:
Fig. 1 shows the signalling device made in accordance with the present invention applied in the particular case of a vehicle in the form of a bicycle.
Fig. 2 shows a detail of the signalling device of Fig. 1.
Fig. 3 shows a detail of the signalling device of Fig. 1.
Fig. 4 schematically shows the signalling device made in accordance with the present invention and the related functions in a first embodiment.
Fig. 5 schematically shows the signalling device made in accordance with the present invention and the related functions in a second embodiment.
Fig. 6 schematically shows the signalling device made in accordance with the present invention and the related functions in a third embodiment.
Fig. 7 schematically shows the signalling device made in accordance with the present invention and the related functions in a fourth embodiment.
Fig. 8 shows the signalling device made in accordance with the present invention applied in the particular case of a vehicle in the form of a tricycle.

### Description of the invention

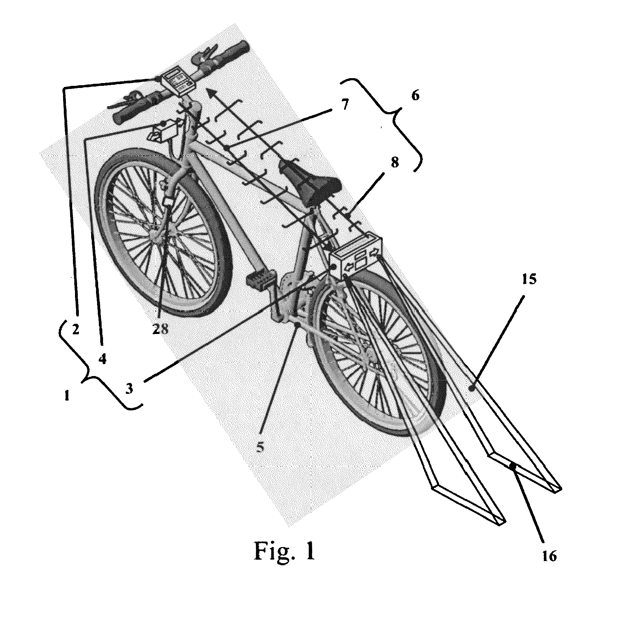

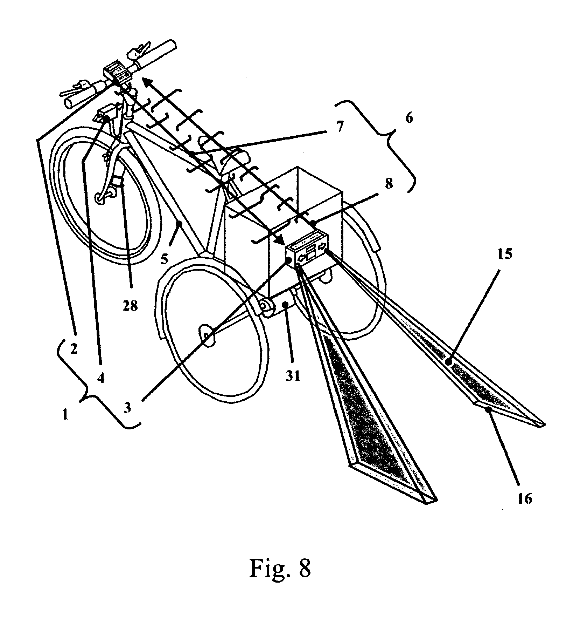

With reference to the Figures (Fig. 1, Fig. 2, Fig. 3, Fig. 8) the signalling device (1) of the invention is adapted to be installed on a vehicle (5), in particular a cycle like:
- a bicycle (Fig. 1, Fig. 2, Fig. 3) such as a pedal bicycle, an assisted pedal bicycle;
- a tricycle (Fig. 8) such as a pedal tricycle, an assisted pedal tricycle equipped with an electric motor (31);
- a quadricycle such as a pedal quadricycle, an assisted pedal quadricycle.

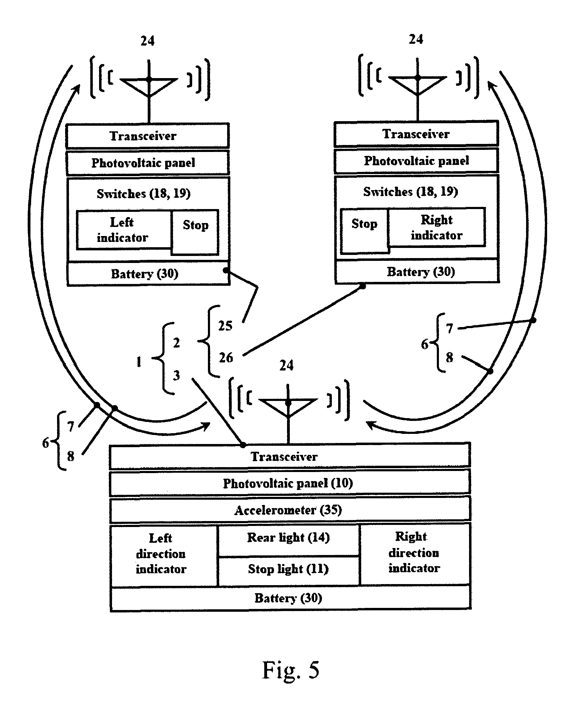

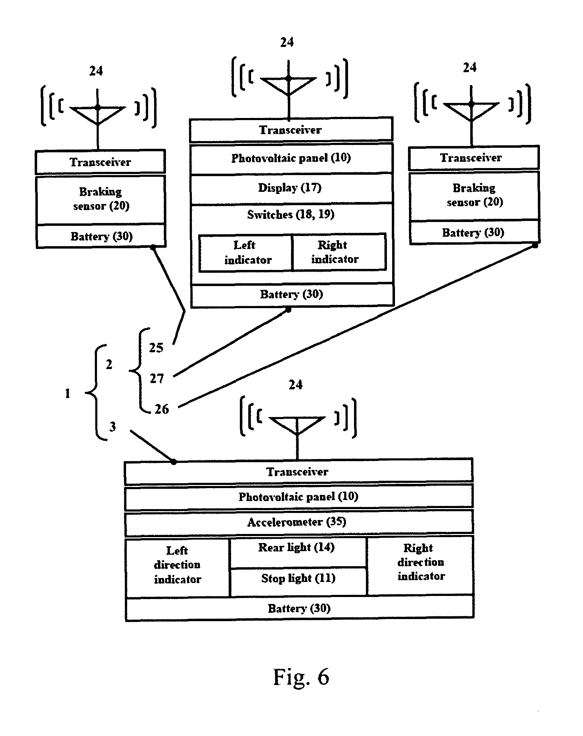

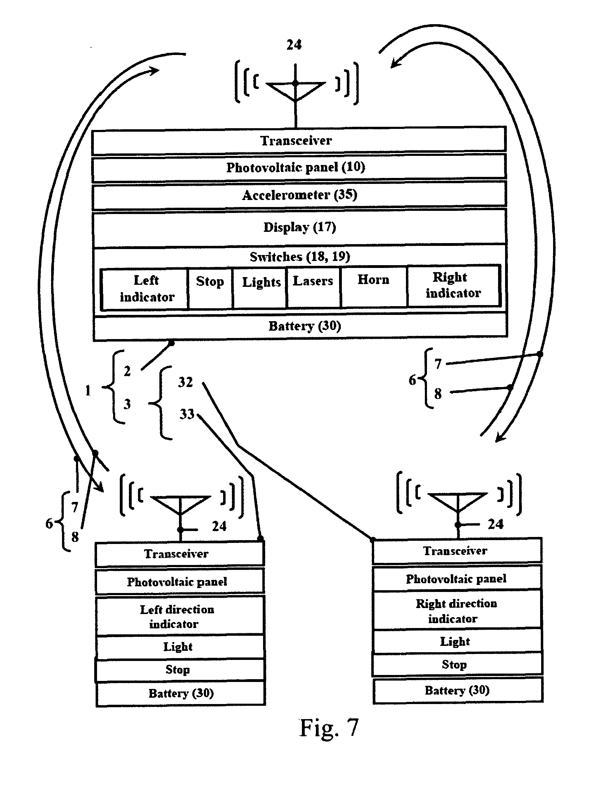

The signalling device (1) of the invention is made up (Fig. 1, Fig. 2, Fig. 3, Fig. 4, Fig. 8) of at least one first unit (2) and one second unit (3). Optionally, in alternative or optional embodiments, the signalling device (1) of the invention can further comprise (Fig. 1) a third unit (4). In general the signalling device (1) of the invention is made up (Fig. 1, Fig. 2, Fig. 3, Fig. 4, Fig. 8) of at least one first unit (2) and a plurality of one or more other units (3, 4). In alternative or optional embodiments, the signalling device (1) of the invention can comprise (Fig. 5) a first unit (2) which is made up of a first component (25) and a second component (26) or (Fig. 6) a first unit (2) which is made up of a first component (25), a second component (26) and a third component (27). In alternative or optional embodiments, the signalling device (1) of the invention can comprise (Fig. 7) a second unit (3) which is made up of a first element (32) and a second element (33).

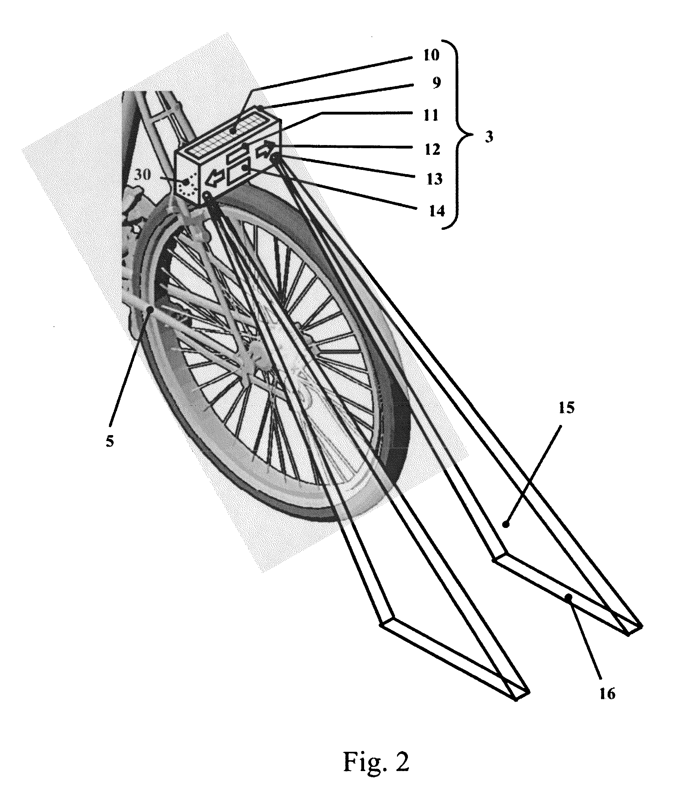

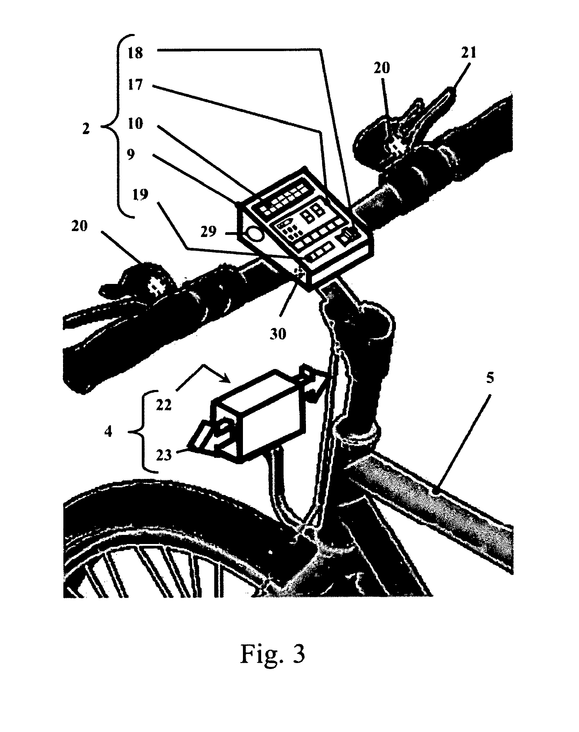

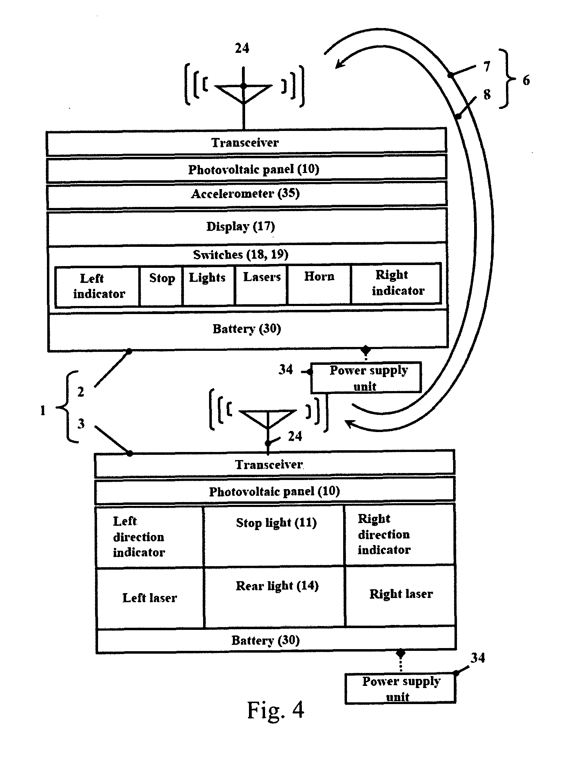

Preferably the first unit (2), second unit (3), third unit (4), first component (25), second component (26), third component (27), first element (32), second element (33) are powered by means of a battery (30), preferably an internal battery, optionally rechargeable by means (Fig. 2, Fig. 3) of a photovoltaic panel (10) installed on the casing (9) optionally in combination with (Fig. 4) an external power supply unit (34) which can be connected by means of a connector.

The signalling device (1) according to the present invention allows to put in safety the vehicle (5) equipping it with a rear stop light (11) which is turned on when the driver operates one of the brakes of the vehicle (5), in order to signal the intention to slow down or stop to the vehicle following the vehicle (5) equipped with the signalling device (1) and which proceeds in the same direction.

Furthermore, the signalling device (1) according to the present invention includes rear direction indicators (12) which are operated when the driver operates a toggle switch (18), in order to signal the intention to turn right or left to the vehicle following the vehicle (5) equipped with the signalling device (1) and which proceeds in the same direction. The toggle switch is preferably installed on the casing (9) of the first unit (2) of the signalling device (1).

Optionally, one can provide a magnetic sensor on the fixed part of the vehicle (5) which is associated with a corresponding micro-magnet on the mobile part of the handlebar or steering control means to control the deactivation of the direction indicators manually operated by the user, thus preventing the user from having to take his/her hands off the handlebar to deactivate the indicators and increasing the safety of the vehicle (5). In practice the signalling device (1) provided with one or more direction indicators (12, 23) can comprise at least one magnetic sensor installed on the frame of the vehicle (5) which is associated with a corresponding magnet installed on the steering control means of the vehicle (5), the magnetic sensor controlling the automatic deactivation of the direction indicators (12, 23) when the steering control means are in a position corresponding to a rectilinear direction of advancement of the vehicle after a steering action.

Furthermore, the signalling device (1) according to the present invention comprises a rear light (14), in order to signal the presence of the vehicle (5) in case of conditions of poor lighting, such as at night. The rear light (14) can be turned on by means of one of a series of switches (19) installed on the casing (9) of the first unit (2) of the signalling device (1).

Furthermore, the signalling device (1) according to the present invention comprises at least one laser (13) intended to project at least one beam (15) on the ground at the rear of the vehicle, the beam (15) giving rise to a light projection (16) on the ground which will have a width extension corresponding to the width of the vehicle (5) on which the signalling device (1) is installed. In this way one provides information on the width dimension to the vehicle following the vehicle (5) equipped with the signalling device (1) of the invention, improving safety. For example the projected laser beam (15) can be (solution not shown) a blade of light placed orthogonally with respect to the direction of advancement of the vehicle (5) and having a width corresponding to the width of the vehicle (5). In the preferred embodiment of the present invention (Fig. 1, Fig. 2, Fig. 3, Fig. 8) the signalling device (1) according to the present invention includes two lasers (13) each of which is intended to project a beam (15) on the ground at the rear of the vehicle, each beam (15) giving rise to a light projection (16) on the ground which will develop in length according to a direction essentially corresponding to the direction of advancement of the vehicle, the two lasers (13) projecting a pair of beams (15) whose projections (16) are essentially reciprocally parallel and spaced by a distance essentially corresponding to the width of the vehicle (5) on which the signalling device (1) is installed, that is to say, spaced by a distance essentially corresponding to the width dimension of the vehicle (5).

The first unit (2) of the signalling device (1) is intended to be installed at the front of the vehicle (5). For example in the case of a bicycle (Fig. 1) or a tricycle (Fig. 8) the first unit (2) is intended to be installed in correspondence of the handlebar of the vehicle (5). For example in the case of a pedal quadricycle (not shown) the first unit (2) is intended to be installed in correspondence of the steering wheel of the vehicle (5). The first unit (2) constitutes the control unit which controls the second unit (3), which is intended to be installed at the rear of the vehicle (5). The signalling device (1) can also comprise a third unit (4) intended to be installed at the front of the vehicle (5) and equipped (Fig. 3) with a front light. (22) and optionally with front direction indicators (23).

At least the first unit (2) and the second unit (3), optionally the first unit (2) and the second unit (3) and the third unit (4), are units equipped (Fig. 4, Fig. 5, Fig. 6, Fig. 7) with transceivers intended for setting up (Fig. 1, Fig. 8) a wireless communication channel (9), that is to say, without electrical connection by means of electrical wires between the units, preferably a two-way communication channel (9), that is to say, provided with:
- a first direction of communication (7) from the first unit (2) to the second unit (3) or to the third unit (4);
- a second direction of communication (8) from the second unit (3) or from the third unit (4) towards the first unit (2).

For this purpose the first unit (2) and the second unit (3) and the third unit (4) are units equipped with antennae (24) of reciprocal communication.

The fact of resorting to transceivers intended for the setting up (Fig. 1, Fig. 8) of a wireless communication channel (9) advantageously allows to obtain a signalling device (1) whose units (2, 3, 4) can be easily installed also by non-qualified personnel.

The exchange of information by means of the wireless communication channel (9) occurs over the air and can occur for example by means of a system usually indicated by the name of "Bluetooth", preferably "Bluetooth Low Energy Single Mode" or "Bluetooth Low Energy Dual Mode". The choice of a wireless communication channel is very advantageous because it enables installation without requiring to apply wires on the cycle. With particular reference to the resort to the Bluetooth technology, this choice is not random but was made for the purpose of enabling easy and prompt communication of the device of the invention in all the countries of the world with one single operation frequency common to all devices without having to use different frequencies for different countries with the consequence of having to customize the hardware of the device.

The units (2, 3, 4) of the signalling device (1) are reciprocally coupled, in the sense that they are provided with a univocal identification code or univocal serial number which ensures its exclusive operation on that specific vehicle (5) preventing the interaction with other signalling devices (1) installed on vehicles which are located nearby.

The first unit (2) performs the "Master" unit function and communicates with the second unit (3) and/or with the third unit (4) which perform the "Slave" unit function.

The first unit (2) sends to the second unit (3) and/or to the third unit (4) the commands combined with the various functions which the second unit (3) or the third unit (4) must perform.

For example, the sending of the commands may occur acting on switches (19) or toggle switches (18) whose activation will be considered as the command of an event to be performed. Following the activation the first unit (2) or master unit sends the command to the slave unit, that is to say, to the second unit (3) or to the third unit (4), by means of the communication channel (6) using the first direction of communication (7). The slave unit (3, 4), once it has received the command, performs the required function and sends in its turn a confirmation message to the master unit by means of the communication channel (6) using the second direction of communication (8). In this way the first unit (2) or master unit will be certain of the execution of the command sent and can activate a visual signal which informs the user of the correct performance of the required action. For example the visual signal can be a warning light or a LED or an indication on a display (17). The functions which may be required by the first unit (2) or master unit and which are performed by the second unit (3) or by the third unit (4), or slave unit are, for example:
- activation with lightning and deactivation of the direction change signal corresponding to a right direction indicator (12, 23), for example (Fig. 4, Fig. 5, Fig. 6, Fig. 7) by means of a switch of the right indicator which can be made in the form (Fig. 3) of a toggle switch (18) or button or switch (19);
- activation with lightning and deactivation of the direction change signal corresponding to a left direction indicator (12, 23), for example (Fig. 4, Fig. 5, Fig. 6, Fig. 7) by means of a switch of the left indicator which can be made in the form (Fig. 3) of a toggle switch (18) or button or switch (19);
- activation and deactivation of the rear light (14), for example (Fig. 4, Fig. 5, Fig. 6, Fig. 7) by means of a switch of the lights which can be made in the form (Fig. 3) of a button or switch (19);
- activation and deactivation of the front light (22), for example (Fig. 4, Fig. 5, Fig. 6, Fig. 7) by means of a switch of the lights which can be made in the form (Fig. 3) of a button or switch (19);
- activation and deactivation of the stop light (11), for example (Fig. 4, Fig. 5, Fig. 6, Fig. 7) by means of braking sensors (20) placed in correspondence of the levers for operating the brakes (21) or by means of the detection of the slowdown of the vehicle (5) operated by means (Fig. 4, Fig. 5, Fig. 6, Fig. 7) of an accelerometer (35);
- activation and deactivation of the lasers (13), for example (Fig. 4, Fig. 7) by means of a switch which can be made in the form (Fig. 3) of a button or switch (19);
- activation of a horn (29), for example (Fig. 4, Fig. 7) by means of a switch which can be made in the form (Fig. 3) of a button or switch (19).

In practice the user of the vehicle (5) has at his/her disposal a real electronic control unit which allows to circulate on the roads with greater safety, it being equipped with several safety functions such as stop light (11), direction indicators (12, 23), front (22) and rear light (14), lasers (13) for signalling the dimensions of the vehicle (5).

In an optional embodiment the activation of the rear light (14) on the second unit (3) and/or of the front light (22) on the third unit (4) can also occur in an automatic way by means of a twilight switch which detects the brightness of the environment and activates the lights following the detection of a brightness lower than a given threshold value.

The lasers (13) which generate the beams (15) whose projections (16) on the ground indicate the width dimension of the vehicle (5) can be activated at discretion of the user by means of a switch which can be made in the form (Fig. 3) of a button or switch (19). The signalling of the dimensions preferably occurs by means of two "lines" projected on the ground by two laser diodes, for example two red laser diodes operating at 650nm Class IIIA which ensure a high level of safety.

In conclusion, the user has at his/her disposal, for his/her own safety, a light indicator or stop light (11) operated every time the vehicle (5) slows down, two rear direction indicators (12) and optionally two front direction indicators (23) operated by the user in case of a right or left turn, a rear light (14) for signalling the vehicle (5) on the road, two lasers (13) for indicating the dimensions and position of the vehicle on the road.

Preferably the first unit (2) or master unit includes a single mode or dual mode Bluetooth 4.0 low energy chip made with a surface assembly technology which ensures a good integration and miniaturization along with the configuration components of the electronic circuit, such as the quartzes, the resistors and the capacitors.

The first unit (2) or master unit can comprise function keys in the form of switches (19) or toggle switches (18), LEDs for signalling the activated function, outputs for piloting the front direction indicators (23) in the case in which they are wired as an alternative to the supply of the third unit (4) in the form of a unit which communicates in a wireless mode with the first unit (2).

Furthermore, the signalling device (1) can include an input connectable to a speed sensor (28), for example placed in correspondence of one of the wheels of the vehicle (5). The speed sensor (28) can determine the speed of advancement of the vehicle (5) and can also serve to calculate the partial distance covered, the total distance covered. Such information can be shown on a display (17) of the first unit (2), preferably a display of the LCD type which can also show the operating instructions of the device, the functions activated by means of the switches (19) and toggle switches (18), the charge status of the battery (30) of the first unit (2), the charge status of the battery (30) of the second unit (3), the charge status of the battery (30) of the third unit (4).

The battery (30) of the first unit (2) can consist of one or more 1.5 Volt penlight batteries or of a rechargeable battery, for example a 3.6 Volt lithium polymer rechargeable battery. Charging can occur by means of a power supply unit (34) connected to the mains and/or by means of a photovoltaic panel (10).

In the preferred embodiment of the present invention the first unit (2), called "master" unit, can comprise for example the following control keys for sending the commands to the other units (3, 4), for example to the second unit (3) and/or to the third unit (4), by means of the wireless communication channel (6):
- turning on/off of the light of the left direction indicator of the rear (12) and/or front direction indicators (23);
- turning on/off of the light of the right direction indicator of the rear (12) and/or front direction indicators (23);
- turning on/off of the rear light (14) and/or of the front light (22);
- turning on/off of the lasers (13) relating to the dimension light.

To the pressure of one of the keys (19) of the first unit (2) corresponds a "turning on" command, while to the following pressure of the same key corresponds a "turning off" command. The user is informed on the status of turning on or turning off of each particular function of the signalling device (1) by means of LED indicators placed on the first unit (2), which are turned on only following the reception of confirmation of the command by the second unit (3) or by the third unit (4) by means of the wireless communication channel (6).

In the case of the direction indicators the second unit (3) or the third unit (4) will activate the corresponding function with flashing light of a LED lamp.

In the case of the stop light it is provided that the turning on command can come from braking sensors (20) placed near the brake operating means (21) which are on the handlebar. However, one can also provide that the braking sensors (20) are placed also in a different position between the brake operating means (21) on the handlebar and the real braking device which acts on the wheels. In an embodiment it is provided that the function of the braking sensors (20) is performed by an accelerometer (35) placed within the first unit (2). Following the detection of a slowdown by means of the accelerometer (35) beyond a given activation threshold, the first unit (2) will automatically determine a braking condition and will send the related command of turning on of the stop light (11). When the detection of the slowdown by means of the accelerometer (35) beyond the given activation threshold ceases, the first unit (2) will automatically determine the end of the braking condition and will send the related command of turning off of the stop light (11).

As a consequence, the first unit (2) will be equipped with a main chip for the management of the commands and of the signals, which will include:
- WAKE input for bringing the chip to an operation mode;
- input of the signal of the accelerometer (35);
- input of the first function key relating to the turning on/off of the left direction indicator of the rear (12) and/or front direction indicators (23);
- input of the second function key relating to the turning on/off of the right direction indicator of the rear (12) and/or front direction indicators (23);
- input of the third function key relating to the turning on/off of the rear light (14) and/or front light (22);
- input of the fourth function key relating to the turning on/off of the lasers (13) for signalling the dimensions of the vehicle (5);
- input of the braking sensors (20);
- command output of the first LED, preferably of yellow colour, for signalling the turning on/off of the left direction indicator of the rear (12) and/or front direction indicators (23);
- command output of the second LED, preferably of yellow colour, for signalling the turning on/off of the right direction indicator of the rear (12) and/or front direction indicators (23);
- command output of the third LED, preferably of green colour, for signalling the turning on/off of the rear light (14) and/or front light (22);
- command output of the fourth LED, preferably of green colour, for signalling the turning on/off of the lasers (13) for signalling the dimensions of the vehicle (5);
- command output of the fourth LED, preferably of red colour, for signalling the turning on/off of the stop light (11).

The other units (3, 4), such as the second unit (3) and the optional third unit (4) are called "slave" units. Such units include a single mode or dual mode Bluetooth 4.0 low energy chip made with a surface assembly technology which ensures good integration and miniaturization along with the configuration components of the electronic circuit, such as the quartzes, the resistors, the capacitors, MOSFET components. The slave units operate as receivers, decoders and executors of the commands received from the master unit by means of the communication channel (6) in the first direction of communication (7) and reply with a confirmation message of the execution of the command by means of the communication channel (6) in the second direction of communication (8).

For example the second unit (3) can be a unit installed on the vehicle (5) in a rear position with respect to the body of the vehicle itself and can comprise five outputs of the MOSFET type which act for the piloting and therefore the activation and the deactivation of the outputs corresponding to the function required by the master unit or first unit (2).

The slave unit, for example the second unit (3), can be equipped, optionally, with the accelerometer (35) previously described for the activation of the stop light (11) in an autonomous way by the command of the master unit or first unit (2), optionally providing the sending of a communication message to the master unit or first unit (2) relating to the turning on of the stop light (11) to allow the master unit or first unit (2) to turn on a corresponding LED signal of activation of the stop light (11). This embodiment is advantageous because it prevents the installation of the braking sensors (20) in correspondence of the brake operating means (21).

The slave unit, for example the second unit (3) or the third unit (4) receive by means of the wireless communication channel (6) the commands coming from the master transmitting unit or first unit (2), preferably installed at the front of the vehicle (5), for example in correspondence of the handlebar or of the steering wheel of the vehicle (5).

In the preferred embodiment of the present invention the slave unit, such as the second unit (2) or the third unit (3), can comprise the following outputs for the activation of corresponding signals:
- piloting output of the light of the left direction indicator of the rear (12) and/or front direction indicators (23);
- piloting output of the light of the right direction indicator of the rear (12) and/or front direction indicators (23);
- piloting output of the rear light (14) and/or of the front light (22);
- piloting output of the stop light (11);
- piloting output of the lasers (13) relating to the dimension light.

To the reception and decoding by the slave unit of a command from the master unit relating to one of the functions which the user wants to activate or deactivate corresponds an action of turning on or turning off of the corresponding signal by the control unit of the slave unit. For example if the user operates, on the control unit of the master unit or first unit (2), the command of turning on/off of the left direction indicator, then in the control unit of the slave unit the corresponding MOSFET will be activated, which will turn on or will make flash, if provided, the LED of the left direction indicator. This operation occurs in a similar way also for other functions such as turning on/off of the right direction indicator, turning on/off of the rear light (14), turning on/off of the front light (22) if present, turning on/off of the stop light (11). The stop light (11) can be turned on for a time corresponding to the activation of one of the braking sensors (20) activated following the pressure of the brake operating means (21) and turned off following the release of the brake operating means (21) itself. As an alternative one can resort to the previously described configuration relating to the resort to the accelerometer (35).

As a consequence, the second unit (3) or the third unit (4) can be equipped with a main chip for the management of the commands and of the signals, which will include:
- WAKE input for bringing the chip to an operation mode;
- input of the signal of the accelerometer (35);
- piloting output of the MOSFET relating to the light of the left direction indicator of the rear (12) and/or front direction indicators (23);
- piloting output of the MOSFET relating to the light of the right direction indicator of the rear (12) and/or front direction indicators (23);
- piloting output of the MOSFET relating to the light of the rear light (14) and/or of the front light (22);
- piloting output of the MOSFET relating to the stop light (11);
- piloting output of the MOSFET relating to the lasers (13) of the dimension light.

As previously explained, the units (2, 3, 4) of the signalling device (1) are equipped with the components of a wireless transceiver system, preferably by using a single mode or dual mode Bluetooth 4.0 low energy chip. The components of the wireless transceiver system communicate with each other with the Bluetooth protocol. The security of the information which travels over the air among the various units is guaranteed by the Bluetooth 4.0 protocol and by the codes inserted in the application of the signalling device (1), such as the Vehicle Code.

In particular the Vehicle Code serves to connect to each other two or more units (2, 3, 4) of the signalling device (1) so that the communication among the units (2, 3, 4) installed on a first vehicle does not interfere with the units (2, 3, 4) installed on a second vehicle which is located near the first vehicle and which is provided with a similar signalling device (1). Therefore, the units (2, 3, 4) of the signalling device (1) will communicate with each other and will execute the commands from another unit only in the case in which there is correspondence between the Vehicle Codes of the units themselves, otherwise they will consider the message as coming from or intended to a unit of another vehicle and this message will be ignored.

Furthermore, it is also provided to be able to use a Country Code, which serves to identify the products sold in a given country rather than in another, for example for trade matters of customization of the devices, for assistance matters, etc.

The units are provided with EEprom Memory which is programmed with the insertion of the Vehicle Code and the Country Code encrypted for the purpose of ensuring the security and the univocity in the connection among the various units of each single signalling device (1) and preventing the interaction between two signalling devices (1) which are located close to each other. By means of the resort to encryption one protects from tampering the information stored in the memory of the device, for example in the EEprom. For example one can use an AES and/or AES-CCS encryption algorithm using some encryption keys up to 8 different encryption keys.

The printed circuits, considering the frequencies in question and the type of the components, will be preferably made of FR4 4-layer vetronite in order to be able to realize some ground plates. The tracks near the component of the wireless transceiver system will have a size of approximately 0.3 mm with 0.7 mm through-holes and 0.4 mm micro-holes.

As previously explained, the first unit (2), second unit (3), third unit (4), first component (25), second component (26), third component (27), first element (32), second element (33) are powered by means of a battery (30), preferably an internal battery, optionally rechargeable by means (Fig. 2, Fig. 3) of a photovoltaic panel (10) installed on the casing (9) optionally in combination with (Fig. 4) an external power supply unit (34) connectable by means of a connector. Optionally, one can also provide a connection with a current generator of the vehicle, such as a dynamo or an alternator for charging during the use of the vehicle (5) itself. For example one can resort to 3.6V 2600 mAh or higher capacity Li-Ion polymer rechargeable batteries or as an alternative to 3 penlight alkaline batteries of common availability to ensure an acceptable duration of the batteries according to the consumption of the present lighting devices.

In order to optimize the production phase of the units (2, 3, 4) of the signalling device (1), the units (2, 3, 4) will be programmed with one single firmware programme code which can reside in an EEprom external to the component of the wireless transceiver system, that is to say, the Bluetooth chip, or be directly programmed in the ROM memory of the component of the wireless transceiver system.

The programming provides to assign the Univocal Activation Codes (Vehicle Code and Country Code) and a Serial Number, which will be inserted in the unit (2, 3, 4) of the signalling device (1) by means of a specific EEprom Programmer. In case of damage to one of the units (2, 3, 4) of the signalling device (1), the customer can request a new master unit (first unit) or slave unit (second unit or third unit) as a replacement by simply indicating the Serial Number of the damaged unit, so that the new unit provided as a replacement will be already set to work with the signalling device (1) of the customer, that is to say, so that the new unit provided as a replacement will be already set with the correct Vehicle Code, Country Code and Serial Number to ensure the operation of the replacement with the other units of the signalling device (1) of the customer.

The units (2, 3, 4) of the signalling device (1) will be preferably equipped with releasable connecting means (not shown) for the removable coupling with the vehicle but one can also provide solutions in which the units (2, 3, 4) of the signalling device (1) are applied in a fixed way on the vehicle (5), optionally with tamper-proof means. For example one can use snap-lock coupling means, coupling means with nuts and bolts, tear-off coupling means.

In a first embodiment (Fig. 4), the signalling device (1) of the invention is made up of a first unit (2) and a second unit (3) wherein the first unit (2) is adapted to be installed in correspondence of the handlebar or the steering wheel of the vehicle (5) and the second unit (3) is adapted to be installed in correspondence of a rear zone of the vehicle (5). The first unit (2) will be the master unit which communicates with the second unit (3) which is the slave unit by means of the transceivers and of the antennae (24) which realize the two-way communication channel (6). The first unit (2) will comprise the operating controls of the signals and the optional display (17), while the second unit (3) will comprise the piloting outputs of the previously described signalling lights. The accelerometer (35) can be placed on the first unit (2) as shown or on the second unit (2).

In a second embodiment (Fig. 5), the signalling device (1) of the invention is made up of a second unit (3) and a first unit (2) which in its turn comprises a first component (25) and a second component (26). The first component (25) and the second component (26) of the first unit (2) are adapted to be installed in correspondence of the handlebar or the steering wheel of the vehicle (5) and the second unit (3) is adapted to be installed in correspondence of a rear zone of the vehicle (5). The first component (25) and the second component (26) of the first unit (2) will be master units which communicate with the second unit (3) which is the slave unit by means of the transceivers and of the antennae (24) which realize the two-way communication channel (6). The first component (25) of the first unit (2) will include the operating controls adapted to be placed on the left side, such as the operating control of the left direction indicator. The second component (26) of the first unit (2) will include the operating controls adapted to be placed on the right side, such as the operating control of the right direction indicator. In this way the use of the signalling device (1) is more intuitive because the controls are placed according to an arrangement with respect to the vehicle which allows for an easier identification by the user, reducing the risk of distraction when looking for the desired activation control. The second unit (3) will comprise the piloting outputs of the previously described signalling lights.

In a third embodiment (Fig. 6), the signalling device (1) of the invention is made up of a second unit (3) and a first unit (2) which in its turn includes a first component (25), a second component (26) and a third component (27). The first component (25) and the second component (26) of the first unit (2) are adapted to be installed in correspondence of the braking means of the vehicle (5) and serve to communicate the activation of the braking means in order to enable the turning on of the stop light. For example the first component (25) and the second component (26) can include the previously described braking sensors (20) and can communicate as slave units with the third component (27) or directly as master units with the second unit (3). The third component (27) of the first unit (2) will include the operating controls of the signals and the optional display (17), while the second unit (3) will include the piloting outputs of the previously described signalling lights. The accelerometer (35) can be positioned on the third component (27) of the first unit (2) or on the second unit (2) as shown.

In a fourth embodiment (Fig. 7), the signalling device (1) of the invention is made up of a first unit (2) and a second unit (3) which in its turn includes a first element (32) and a second element (33). The first unit (2) is adapted to be installed in correspondence of the handlebar or the steering wheel of the vehicle (5). The first element (32) and the second element (33) of the second unit (3) are slave units which communicate with the first master unit (2) by means of the transceivers and of the antennae (24) which realize the two-way communication channel (6). The first unit (2) will include the operating controls of the signals and the optional display (17). The first element (32) is adapted to be installed in correspondence of a right rear zone of the vehicle (5) and will include at least the right rear direction indicator. The second element (33) is adapted to be installed in correspondence of a left rear zone of the vehicle (5) and will include at least the left rear direction indicator. In this solution one can provide to duplicate on the first element (32) and second element (33) of the second unit (3) the rear light (14) and the stop light (11) in order to ensure signalling also in case of damage to a component or a lamp.

In general, therefore, the present invention relates to (Fig. 1, Fig. 2, Fig. 3) a signalling device (1) adapted to be installed on a vehicle (5). The signalling device (1) comprising at least one first unit (2) and a plurality of one or more other units (3, 4) wherein the first unit (2) is adapted to be installed near or in correspondence of a handlebar or steering wheel of the vehicle (5) and at least one of the other units (3, 4) of said plurality of other units (3, 4) is adapted to be installed at the rear of the vehicle (5), at the rear being referred to the vehicle (5) with respect to a direction of advancement of the vehicle. The first unit (2) is a control unit of the plurality of one or more other units (3, 4). The first unit (2) includes switches or toggle switches or buttons (18, 19) or sensors (20, 35) intended to give a command of activation of light or sound signalling indicators at least some of which are placed on a unit selected from the plurality of one or more other units (3, 4). The first unit (2) and the other unit (3, 4) are equipped (Fig. 4, Fig. 5, Fig. 6, Fig. 7) with transceivers implementing a wireless communication channel (6) between the first unit (2) and the other unit (3, 4), following the control of one of the switches or toggle switches or buttons (18, 19) by a user of the first unit (2) the first unit (2) sending a first activation message containing a command of activation of at least one of the light or sound signalling indicators to the other unit (3, 4) by means of the wireless communication channel (6) in a first direction of communication (7) from the first unit (2) to the other unit (3, 4), following the reception of said first activation message by the second unit (3) the other unit (3, 4) activating one of the light or sound signalling indicators.

Preferably the first unit (2) and the other unit (3, 4) are equipped with transceivers implementing a wireless two-way communication channel (6) between the first unit (2) and the other unit (3, 4). Following the control of one of the switches or toggle switches or buttons (18, 19) by the user of the first unit (2), the first unit (2) sends to the other unit (3, 4) the first activation message by means of the wireless communication channel (6) in the first direction of communication (7). Following the reception of said first activation message by the other unit (3, 4), the other unit (3, 4) activates one of the light or sound signalling indicators and sends a second confirmation message of execution of the command of activation to the first unit (2) by means of the wireless communication channel (6) in a second direction of communication (8) from the other unit (3, 4) to the first unit (2). Following the reception of said second confirmation message by the first unit (2), the first unit (2) activates a means of signalling of the completed execution of the activation command, for example a LED or a signal on the display (17).

The other unit (3, 4) preferably comprises (Fig. 1, Fig. 2, Fig. 8) at least one of said light signalling indicators which is an indicator in the form of at least one laser (13), the laser (13) projecting a beam (15) at the rear of the vehicle (5). The beam (15) gives rise to at least one light projection (16) on the ground on which the vehicle (5) moves which has a width extension essentially corresponding to the width of the vehicle (5) on which the signalling device (1) is installed and which provides information on the dimensions of the vehicle (5) to those who come from behind with respect to the vehicle (5) in order to provide the user of the vehicle (5) with greater safety. Preferably the other unit (3, 4) includes two of these indicators in the form of lasers (13):
- a first laser (13) projecting a first beam (15) at the rear of the vehicle giving rise to a corresponding first light projection on the ground;
- a second laser (13) projecting a second beam (15) at the rear of the vehicle giving rise to a corresponding second light projection on the ground.

The first light projection and the second light projection are spaced from each other by a distance essentially corresponding to the width of the vehicle (5) on which the signalling device (1) is installed, that is to say, they are spaced from each other by a distance essentially corresponding to the width dimension of the vehicle (5). Preferably the first light projection and the second light projection are essentially rectilinear oblong projections and essentially parallel to each other.

The other unit (3, 4) can comprise (Fig. 2, Fig. 4, Fig. 5, Fig. 6, Fig. 7) a stop light (11), the stop light (11) being adapted to be activated following a slowdown of the vehicle (5). For this purpose, the signalling device (1) can comprise:
- braking sensors (20) adapted to be installed on the vehicle (5) in correspondence of brake operating means of the vehicle (5), the activation of said braking sensors (20) being detected by the first unit (2) which sends the first activation message containing a command of activation of the stop light (11);
- an accelerometer (35) placed within the first unit (2), following the detection of a slowdown of the vehicle (5) by means of the accelerometer (35) beyond a given activation threshold, the first unit (2) sending the first activation message containing a command of activation of the stop light (11);
- an accelerometer (35) placed within the second unit (2), following the detection of a slowdown of the vehicle (5) by means of the accelerometer (35) beyond a given activation threshold, the second unit (2) activating the stop light (11).

The other unit (3, 4) can comprise at least one of the light signalling indicators in the form of a rear light (14) adapted to signal the presence of the vehicle (5). The activation of said rear light (14) of the other unit (3, 4) occurs following the reception by the other unit (3, 4) of a first activation message by means of the wireless communication channel (6) in the first direction of communication (7) from the first unit (2) following a turn-on command given by the user by means of one of the switches or toggle switches or buttons (18, 19) of the first unit (2) or by means of a twilight switch.

The other unit (3, 4) can comprise at least one pair of light signalling indicators which are indicators in the form of rear direction indicators (12), a first rear direction indicator being adapted to signal the user's intention to make a right turn with the vehicle (5) and a second rear direction indicator being adapted to signal the user's intention to make a left turn with the vehicle (5). The activation of the rear direction indicators (12) of the other unit (3, 4) occurs following the reception by the other unit (3, 4) of a first activation message by means of the wireless communication channel (6) in the first direction of communication (7) from the first unit (2) following a turn-on command given by the user by means of one of the switches or toggle switches or buttons (18, 19) of the first unit (2).

The plurality of one or more other units (3, 4) can comprise (Fig. 1, Fig. 3) a second unit (3) which is adapted to be installed at the rear of the vehicle (5) and a third unit (4) comprising at least one pair of light signalling indicators which are indicators in the form of front direction indicators (23), a first front direction indicator being adapted to signal the user's intention to make a right turn with the vehicle (5) and a second front direction indicator being adapted to signal the user's intention to make a left turn with the vehicle (5). The activation of the front direction indicators (23) of said third unit (4) occurring following the reception by said third unit (4) of said first activation message by means of said wireless communication channel (6) in said first direction of communication (7) from said first unit (2) following a turn-on command given by said user by means of one of said switches or toggle switches or buttons (18, 19) of said first unit (2).

The third unit (4) can also comprise an indicator in the form of a front light (22) adapted to signal the presence of the vehicle (5) and adapted to light the ground in front of the vehicle (5). The activation of the front light (22) of the third unit (4) can occur following the reception by the third unit (4) of a first activation message by means of the wireless communication channel (6) in the first direction of communication (7) from the first unit (2) following a turn-on command given by the user by means of one of the switches or toggle switches or buttons (18, 19) of the first unit (2) or by means of a twilight switch.

In an embodiment (Fig. 5, Fig. 6) the first unit (2) is made up of a first component (25) and a second component (26). The first component (25) comprises a first plurality of switches or toggle switches or buttons (18, 19) or sensors (20, 35) intended to give the command of activation of light or sound signalling indicators. The second component (26) comprises a second plurality of switches or toggle switches or buttons (18, 19) or sensors (20, 35) intended to give the command of activation of light or sound signalling indicators. The first component (25) and the second component (26) are equipped with transceivers implementing a respective wireless communication channel (6) with at least one of the other units (3, 4).

In an embodiment (Fig. 7) the other unit (3, 4) is made up of a first element (32) and a second element (33). The first element (32) comprises a first plurality of the light or sound signalling indicators. The second element (33) comprises a second plurality of the light or sound signalling indicators. The first element (33) and the second element (34) are equipped with transceivers implementing a respective wireless communication channel (6) with the first unit (2).

The signalling device (1) can also comprise a speed sensor (28) adapted to provide information on the speed of the vehicle (5). The speed sensor (28) is intended to be connected to the first unit (2). The first unit (2) displays on the display (17) at least one series of information selected from the group consisting of information on speed of advancement of the vehicle (5), total distance covered from a first starting point, partial distance covered from a second starting point.

The signalling device (1) comprises Univocal Activation Codes in the form of one or more codes selected from the group consisting of Vehicle Code, Country Code, Serial Number. The Univocal Activation Codes are intended to be stored in the unit (2, 3, 4) of the signalling device (1). At least the Vehicle Code is intended to realize a univocal reciprocal coupling between the first unit (2) which constitutes a control master unit and one or more of the second units (3, 4) which constitute slave units univocally associated with the first master unit (2), univocal meaning that the units (2, 3, 4) of said signalling device (1) cannot be reciprocally coupled with other units belonging to another different signalling device (1). At least the Country Code is intended to identify the country in which the signalling device (1) is marketed. At least the Serial Number is intended to identify the signalling device (1) to retrieve the Vehicle Code and the Country Code to customize a possible replacement or other unit which can be coupled with a first unit of a customer who already possesses said first unit (2).

The communication channel (6) is a communication channel of the type commonly known by the name of Bluetooth, preferably a communication channel of the type commonly known by the name of Bluetooth Low Energy, even more preferably a communication channel of the type commonly known by the name of Bluetooth Low Energy Single Mode or a communication channel of the type commonly known by the name of Bluetooth Low Energy Dual Mode.

The units (2, 3, 4) of the signalling device (1) comprise a battery (30), preferably an internal battery, optionally rechargeable by means of a photovoltaic panel (10) installed on a casing (9) of the units (2, 3, 4) or by means of an external power supply unit (34) connectable to the units (2, 3, 4) by means of a connector.

The units (2, 3, 4) of the signalling device (1) comprise coupling means adapted for fixing the units (2, 3, 4) on the vehicle (5), the coupling means being preferably selected from the group consisting of snap-lock coupling means, coupling means with nuts and bolts, tear-off coupling means, coupling means of the fixed type provided with tamper-proof means.

Advantageously, an operating method of the signalling device (1) is also provided, wherein:
- in a first operating phase, following the detection of a slowdown of the vehicle (5) by means of the accelerometer (35) at least one of the light signalling indicators is activated in the flashing operating mode, said light signalling indicator being preferably the stop light (11) or another different light signalling indicator;
- in a second operating phase, following the detection of a braking action of the vehicle (5) by means of the braking sensors (20) said light signalling indicator, which during the slowdown was activated in the flashing operating mode, is activated according to a fixed and non-flashing operating mode, said light signalling indicator being preferably the stop light (11) or another different light signalling indicator.

This solution according to the described operating method is particularly advantageous from the point of view of safety, in particular in the case of application on a vehicle (5) which is a cycle. In fact, considering the particular operating modes of cycles, the fact of having at one's disposal a double indicator which first indicates a slowdown due for instance to an interruption of pedalling and then indicates an actual braking by the user, allows to considerably increase the safety of the cycle during use. Furthermore, said system can also be considered as a double safety system because, in case of failure of one of the devices, the other operating phase provides a signal anyway. For example:
- in case of failure of the accelerometer (35) the braking signal identified by means of the braking sensors (20) would remain active in any case;
   or
- in case of failure of the braking sensors (20) the slowdown signal identified by means of the accelerometer (35) would remain active in any case.

Furthermore, the signalling device (1) can also comprise a rear video camera associated with recording means, the video camera being combined with a presence sensor or with means for detecting an impact and with control means for the controlled overwriting of the recording made on the recording means. The video camera, in this way, can record on the recording means the images relating for example to another vehicle which bumps into the vehicle (5) which comprises the signalling device (1) of the invention. In this way, in case of an accident caused by a hit-and-run driver who after the accident does not stop to help, the video camera will store on the recording means the images of the accident occurred. Advantageously, it is provided that the video camera can be coupled with a presence sensor or with means for detecting an impact or with control means for the controlled overwriting of the recording in such a way as to autonomously manage the recording means in such a way as to always keep stored the last minutes recorded before an impact or accident. For example it can be provided that the signalling device (1) interrupts the overwriting of the data recorded by the video camera when:
- the presence of a too close vehicle is detected, this fact being detected by means of the presence sensor;
- an impact is detected by means of impact detecting means.

It can be provided that the video camera can be activated automatically when the vehicle (5) is moving or manually by the user, for example by means of an activation button placed on the first unit or master unit (2), which can also be provided with a corresponding signaller of the completed activation of the video camera. The video camera will preferably be integrated in the second unit or slave unit (3), but one can also provide different positions of installation on the vehicle (5).

For example, the presence sensor can be an infrared sensor with a range of 10-30 metres. For example, the impact detecting means can be impact sensors which are activated following a severe impact or inertial sensors or accelerometers.

Preferably, the control means for controlled overwriting are configured to continuously record periods of about 30 minutes.

The storage means can be for example memory cards for the storage of digital data.

The video camera will be of the waterproof and shockproof type.

Furthermore, said function can be combined with a telephone module and with a satellite location module. In this way, in case of accident, the signalling device (1) also allows to locate the vehicle (5) and to automatically call for help with the transmission of an automatic voice message which also indicates the position of the vehicle (5) which was involved in an accident or the sending of a help request message which also indicates the position of the vehicle (5) which was involved in an accident.

The telephone module can be combined with a SIM card associated with a mobile provider while the satellite location module only serves to obtain the exact geographical coordinates of the point in which the vehicle (5) which needs help is located.

The call or the sending of messages occurs towards stored telephone numbers by pressing a specific Help request button or automatically following the detection of an impact by means of the impact detecting means. One can also provide a service associated with an operations centre which, following the call, contacts the user of the vehicle (5) and, in case of no answer, automatically sends help from the position closest to the place of the supposed accident.

Furthermore, it is provided that the signalling device (1) is combined with a univocal identification key combined with a card of the Smart Cart type which proves the ownership of the signalling device (1), for example to be shown in case of being brought to a stop by police control. In this way it is possible to prevent the theft of the signalling device (1), which can also be made activable by means of the card of the Smart Card type through 125 Khz RFID Transponder mechanisms and by checking the match with the activation key of the signalling device (1). The univocal identification key can comprise an identification serial code of the signalling device (1) which can be also correspondingly silkscreen printed or printed in relief on the signalling device (1).

The present invention also relates to a vehicle (5) which comprises the signalling device (1) of the invention as described.

The description of the present invention was made with reference to the enclosed figures in a preferred embodiment, but it is evident that many possible alterations, changes and variants will be immediately clear to those skilled in the art in the light of the previous description. Therefore, it should be underlined that the invention is not limited to the previous description, but it includes all alterations, changes and variants in accordance with the appended claims.

### Nomenclature used

With reference to the identification numbers shown in the enclosed figures, the following nomenclature was used:
1. Signalling device
2. First unit or master unit
3. Second unit or slave unit
4. Third unit or slave unit
5. Vehicle
6. Communication channel
7. First direction of communication
8. Second direction of communication
9. Casing
10. Photovoltaic panel
11. Stop light
12. Rear direction indicator
13. Laser
14. Rear light
15. Beam
16. Projection
17. Display
18. Toggle switch
19. Switch or button or key
20. Braking sensor
21. Brake operating means
22. Front light
23. Front direction indicator
24. Antenna
25. First component
26. Second component
27. Third component
28. Speed sensor
29. Horn
30. Battery
31. Motor
32. First element
33. Second element
34. Power supply unit
35. Accelerometer

## Claims

**1.** Signalling device (1) adapted to be installed on a vehicle (5), said signalling device (1) comprising at least one first unit (2) and a plurality of one or more other units (3, 4), said first unit (2) being adapted to be installed near or in correspondence of a handlebar or steering wheel of said vehicle (5), at least one of said other units (3, 4) of said plurality being adapted to be installed at the rear of said vehicle (5) wherein at the rear is referred to said vehicle (5) with respect to a direction of advancement of the vehicle itself, said first unit (2) being a control unit of said plurality of one or more other units (3, 4), said first unit (2) comprising switches or toggle switches or buttons (18, 19) or sensors (20, 35) which are intended to give an activation command of light or sound signalling indicators at least some of which are placed on a unit selected from said plurality of one or more other units (3, 4), wherein said first unit (2) and said other units (3, 4) are provided with transceivers implementing a wireless communication channel (6) between said first unit (2) and said other units (3, 4), following the command of one of said switches or toggle switches or buttons (18, 19) by a user of said first unit (2) said first unit (2) sending a first activation message containing an activation command of at least one of said light or sound signalling indicators to at least one of said other units (3, 4) by means of said wireless communication channel (6) in a first direction of communication (7) from said first unit (2) to at least one of said other units (3, 4), following the reception of said first activation message by said other unit (3, 4) said other unit (3, 4) activating one of said light or sound signalling indicators and furthermore wherein said other unit (3, 4) comprises one of said light or sound signalling indicators which is a stop light (11), said stop light (11) being adapted to be activated following a slowdown or braking of said vehicle (5) **characterised in that**
said first unit (2) and said other units (3, 4) are provided with transceivers implementing a wireless two-way communication channel (6) between said first unit (2) and said other units (3, 4), following the command of one of said switches or toggle switches or buttons (18, 19) by the user of said first unit (2) said first unit (2) sending to at least one of said other units (3, 4) said first activation message by means of said wireless communication channel (6) in said first direction of communication (7), following the reception of said first activation message by said other unit (3, 4) said other unit (3, 4) activating one of said light or sound signalling indicators and sending a second message confirming the execution of said activation command to said first unit (2) by means of said wireless communication channel (6) in a second direction of communication (8) from said other unit (3, 4) to said first unit (2), following the reception of said second confirmation message by said first unit (2) said first unit (2) activating a signalling means signalling the execution of said activation command.

**2.** Signalling device (1) according to the previous claim, **characterised in that** said other unit (3, 4) comprises at least one of said light signalling indicators which is an indicator in the form of at least one laser (13), said laser (13) projecting a beam (15) at the rear of said vehicle (5), said beam (15) giving rise to at least one light projection (16) on the ground which has a width extension essentially corresponding to the width of said vehicle (5) on which said signalling device (1) is installed or **characterised in that**
said other unit (3, 4) comprises two of said indicators in the form of lasers (13), a first of said lasers (13) projecting a first of said beams (15) at the rear of said vehicle giving rise to a corresponding first light projection on the ground, a second of said lasers (13) projecting a second of said beams (15) at the rear of said vehicle giving rise to a corresponding second light projection on the ground, said first light projection and said second light projection being spaced from each other by a distance essentially corresponding to the width of said vehicle (5) on which said signalling device (1) is installed, that is to say, being spaced from each other by a distance essentially corresponding to the width dimension of said vehicle (5), said first light projection and said second light projection preferably being essentially rectilinear and essentially reciprocally parallel oblong projections.

**3.** Signalling device (1) according to any of the previous claims, **characterised in that** it comprises braking sensors (20) adapted to be installed on said vehicle (5) in correspondence of brake operating means of said vehicle (5), the activation of said braking sensors (20) being detected by said first unit (2) which sends said first activation message containing an activation command of said stop light (11) or **characterised in that**
it comprises an accelerometer (35) placed within said first unit (2), following the detection of a slowdown of said vehicle (5) by means of said accelerometer (35) beyond a given activation threshold said first unit (2) sending said first activation message containing an activation command of said stop light (11) or **characterised in that**
it comprises an accelerometer (35) placed within said other unit (3, 4), following the detection of a slowdown of said vehicle (5) by means of said accelerometer (35) beyond a given activation threshold said other unit (3, 4) activating said stop light (11).

**4.** Signalling device (1) according to any of the previous claims, **characterised in that** said other unit (3, 4) comprises at least one of said light signalling indicators which is an indicator in the form of a rear light (14) adapted to signal the presence of said vehicle (5), the activation of said rear light (14) of said other unit (3, 4) occurring following the reception by said other unit (3, 4) of said first activation message by means of said wireless communication channel (6) in said first direction of communication (7) from said first unit (2) following an activation command given by said user by means of one of said switches or toggle switches or buttons (18, 19) of said first unit (2) or by means of a twilight switch or **characterised in that** said other unit (3, 4) comprises at least one pair of said light signalling indicators which are indicators in the form of rear direction indicators (12), a first rear direction indicator being adapted to signal the intention of said user to make a right turn with said vehicle (5) and a second rear direction indicator being adapted to signal the intention of said user to make a left turn with said vehicle (5), the activation of said rear direction indicators (12) of said other units (3, 4) occurring following the reception by said other unit (3, 4) of said first activation message by means of said wireless communication channel (6) in said first direction of communication (7) from said first unit (2) following an activation command given by said user by means of one of said switches or toggle switches or buttons (18, 19) of said first unit (2).

**5.** Signalling device (1) according to any of the previous claims, **characterised in that** said plurality of one or more other units (3, 4) comprises a second unit (3) which is adapted to be installed at the rear of said vehicle (5) and a third unit (4), said third unit (4) comprising at least one pair of said light signalling indicators which are indicators in the form of front direction indicators (23), a first front direction indicator being adapted to signal the intention of said user to make a right turn with said vehicle (5) and a second front direction indicator being adapted to signal the intention of said user to make a left turn with said vehicle (5), the activation of said front direction indicators (23) of said third unit (4) occurring following the reception by said third unit (4) of said first activation message by means of said wireless communication channel (6) in said first direction of communication (7) from said first unit (2) following an activation command given by said user by means of one of said switches or toggle switches or buttons (18, 19) of said first unit (2), or said third unit (4) comprising at least one of said light signalling indicators which is an indicator in the form of a front light (22) adapted to signal the presence of said vehicle (5) and adapted to light the ground in front of said vehicle (5), the activation of said front light (22) of said third unit (4) occurring following the reception by said third unit (4) of said first activation message by means of said wireless communication channel (6) in said first direction of communication (7) from said first unit (2) following an activation command given by said user by means of one of said switches or toggle switches or buttons (18, 19) of said first unit (2) or by means of a twilight switch.

**6.** Signalling device (1) according to claim 4 or according to claim 5, wherein said signalling device (1) is provided with one or more of said direction indicators (12, 23) **characterised in that**
it comprises at least one magnetic sensor on the frame of said vehicle (5) which is associated with a corresponding magnet on the steering control means of the vehicle (5), said magnetic sensor controlling the automatic deactivation of said direction indicators (12, 23) when the steering control means are in a position corresponding to a rectilinear direction of advancement of the vehicle after a steering action.

**7.** Signalling device (1) according to any of the previous claims, **characterised in that** said first unit (2) is made up of a first component (25) and a second component (26), said first component (25) comprising a first plurality of said switches or toggle switches or buttons (18, 19) or sensors (20, 35) which are intended to give said activation command of light or sound signalling indicators and said second component (26) comprising a second plurality of said switches or toggle switches or buttons (18, 19) or sensors (20, 35) which are intended to give said activation command of light or sound signalling indicators, said first component (25) and said second component (26) being provided with said transceivers implementing a respective wireless communication channel (6) with said other unit (3, 4).

**8.** Signalling device (1) according to any of the previous claims, **characterised in that** at least one of said other units (3, 4) is made up of a first element (32) and a second element (33), said first element (32) comprising a first plurality of said light or sound signalling indicators and said second element (33) comprising a second plurality of said light or sound signalling indicators, said first element (33) and said second element (34) being provided with said transceivers implementing a respective wireless communication channel (6) with said first unit (2).

**9.** Signalling device (1) according to any of the previous claims, **characterised in that** said first unit (2) comprises a display (17), preferably a display of the LCD type which is intended to display information on the status of said signalling device (1).

**10.** Signalling device (1) according to the previous claim, **characterised in that** said signalling device (1) comprises a speed sensor (28) which is adapted to provide information on the speed of said vehicle (5), said speed sensor (28) being intended to be connected to said first unit (2), said first unit (2) displaying on said display (17) at least one series of information selected from the group consisting of information on the speed of advancement of said vehicle (5), the total distance covered from a first starting point, the partial distance covered from a second starting point.

**11.** Signalling device (1) according to any of the previous claims, **characterised in that** it comprises Univocal Activation Codes in the form of one or more codes selected from the group consisting of Vehicle Code, Country Code, Serial Number, said Univocal Activation Codes being intended to be stored in said unit (2, 3, 4) of said signalling device (1), at least said Vehicle Code being intended to realize a univocal reciprocal coupling between said first unit (2) which constitutes a control master unit and one or more of said other units (3, 4) which constitute slave units univocally associated with said first master unit (2), univocal meaning that said units (2, 3, 4) of said signalling device (1) cannot be reciprocally coupled with other units belonging to another different signalling device (1), at least said Country Code being intended to identify the country in which said signalling device (1) is marketed, at least said Serial Number being intended to identify said signalling device (1) to retrieve said Vehicle Code and Country Code to customize a possible replacement or other unit which is connectable to a first unit of a customer already possessing said first unit (2).

**12.** Signalling device (1) according to any of the previous claims, **characterised in that** said communication channel (6) is a communication channel of the type commonly known by the name of Bluetooth, preferably a communication channel of the type commonly known by the name of Bluetooth Low Energy, even more preferably a communication channel of the type commonly known by the name of Bluetooth Low Energy Single Mode or a communication channel of the type commonly known by the name of Bluetooth Low Energy Dual Mode.

**13.** Signalling device (1) according to any of the previous claims, **characterised in that** said units (2, 3, 4) of said signalling device (1) comprise a battery (30), preferably an internal battery, optionally rechargeable by means of a photovoltaic panel (10) installed on a casing (9) of said unit (2, 3, 4) or by means of an external power supply unit (34) which can be connected to said unit (2, 3, 4) by means of a connector.

**14.** Signalling device (1) according to any of the previous claims 3 to 13, **characterised in that**
said signalling device (1) is provided both with said accelerometer and with said braking sensors (20) and further **characterised in that**
said signalling device (1) operates according to an operating method in which:
- in a first operating phase, following the detection of a slowdown of said vehicle (5) by means of said accelerometer (35) at least one of said light signalling indicators is activated in a flashing operating mode, said light signalling indicator being preferably said stop light (11) or another different light signalling indicator;
- in a second operating phase, following the detection of a braking of said vehicle (5) by means of said braking sensors (20) said light signalling indicator which during slowdown was activated in said flashing operating mode is activated according to a fixed and non-flashing operating mode, said light signalling indicator being preferably said stop light (11) or another different light signalling indicator.

**14.** Signalling device (1) according to any of the previous claims, **characterised in that** it comprises a rear video camera associated with continuous recording means, said video camera being combined with a presence sensor or with impact detecting means and with control means for the controlled overwriting of the recording made on the recording means, said control means being configured to interrupt the overwriting of data on said recording means following the activation of said presence sensor or impact detecting means.

**15.** Signalling device (1) according to the previous claim, **characterised in that** it comprises a telephone module and a satellite location module, said telephone module being configured to make calls for help or to send help request messages following the activation of said presence sensor or impact detecting means, said telephone module being configured to transmit a voice or text message containing a help request and further containing data on the position of said vehicle (5) obtained by means of said satellite location module.

**16.** Signalling device (1) according to any of the previous claims, **characterised in that** it comprises radio-frequency activation means by means of a card of the Smart Card type associated with a univocal identification key of said signalling device (1)

**17.** Vehicle (5) **characterised in that**
it comprises said signalling device (1) made according to any of the previous claims.
